# EUROPÄISCHE PATENTSCHRIFT

(11) **EP 1 675 033 B1**
(45) Veröffentlichungstag und Bekanntmachung des Hinweises auf die Patenterteilung: **09.04.2008**
(21) Anmeldenummer: 05026917.4
(22) Anmeldetag: 09.12.2005
(51) Int. Cl.: G06K 7/00, G06K 19/07

(54) **Verfahren zur drahtlosen Datenübertragung**
Wireless data communication method
Méthode de transmission de données sans fil

(30) Priorität: 13.12.2004 DE 102004062364
(43) Veröffentlichungstag der Anmeldung: 28.06.2006
(73) Patentinhaber: ATMEL Germany GmbH, 74072 Heilbronn (DE)
(72) Erfinder: Fischer, Martin, 74629 Pfedelbach (DE); Friedrich, Ulrich, 74248 Ellhofen (DE); Ziebertz, Dirk, 74246 Eberstadt (DE)

(56) Entgegenhaltungen:
- EP-A- 1 467 314
- FR-A- 2 790 154

## Beschreibung

Die Erfindung betrifft ein Verfahren zur drahtlosen Datenübertragung zwischen einer Basisstation und einem rückstreubasierten Transponder, bei dem der Transponder nach einer Initialisierung oder in vorgebbaren Zeitintervallen unabhängig von durch die Basisstation gesendeten Daten ein Präsenzsignal erzeugt.

Transponder werden in sogenannten Radio-Frequency-Identification-(RFID)-Systemen verwendet. Hierbei werden zwischen einer oder mehreren Basisstationen bzw. Lesegeräten und einem oder mehreren Transpondern drahtlos Daten bidirektional übertragen. Auf dem Transponder können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Betriebsenergie bzw. Betriebsleistung dem von der Basisstation emittierten elektromagnetischen Feld.

Zur Datenübertragung von einem Transponder zur Basisstation mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen bzw. ein Trägersignal emittiert, das durch die Sende- und Empfangseinrichtung des Transponders entsprechend den an die Basisstation zu übertragenden Daten mit einem Unterträger-Modulationsverfahren moduliert und reflektiert wird. Die typischen Modulationsverfahren hierfür sind die Amplitudenmodulation und die Phasenmodulation.

Die Datenübertragung beruht in der Regel auf dem sogenannten Reader-Talks-First-Prinzip, bei dem eine Datenübertragung, auch die vom Transponder zur Basisstation, durch die Basisstation bzw. den Reader eingeleitet wird. Hierzu sendet die Basisstation üblicherweise Daten bzw. ein Kommando an den Transponder, der im Anschluss daran oder überlappend seine Daten an die Basisstation überträgt.

Neuerdings kommen Transponder auch in elektronischen Warensicherungssystemen oder Electronic-Article-Surveillance(EAS)-Systemen zum Einsatz. Transponderbasierte EAS-Systeme umfassen hierzu üblicherweise Transponder, die mit zu sichernden Waren verbunden sind, und eine oder mehrere Basisstationen. Wird die Ware und somit der Transponder in die Reichweite bzw. den Ansprechbereich einer Basisstation gebracht, wird dies durch die Basisstation detektiert und entsprechend, beispielsweise durch Erzeugen einer Alarmmeldung, ausgewertet.

Um die möglichst verzögerungsfreie Detektion eines Transponders durch eine Basisstation zu ermöglichen, beruhen derartige EAS-Funktionen auf dem sogenannten Tag-Talks-Frist-Prinzip. Der Transponder bzw. der Tag erzeugt hierbei nach einer Initialisierung oder in vorgebbaren Zeitintervallen unabhängig von der Basisstation ein Präsenzsignal, das von der Basisstation detektierbar ist, sobald der Transponder in die Reichweite bzw. den Ansprechbereich der Basisstation gelangt.

Wenn Transponder, die in EAS-Systemen zum Einsatz kommen und ein Präsenzsignal gemäß dem Tag-Talks-Frist-Prinzip erzeugen, nach dem Reader-Talks-First-Prinzip ansprechbar sein sollen, beispielsweise um sie zu programmieren, ist es notwendig, dass die Transponder Daten von der Basisstation empfangen können, während sie das Präsenzsignal senden.

Die Datenübertragung von der Basisstation zu einem Transponder erfolgt üblicherweise mit Hilfe einer Amplitudenmodulation des durch die Basisstation gesendeten Trägersignals in Form von aufeinanderfolgenden Feldlücken bzw. Feldabschwächungen des Trägersignals, die auch als Notche bezeichnet werden. Derartige Notche werden im Transponder mit Hilfe von Receiver-Signal-Strength-Indicator(RSSI)-Schaltungen detektiert.

Wenn das Präsenzsignal des Transponders durch Amplitudenmodulation und Rückstreuen des Trägersignals durch den Transponder erzeugt wird, wird der Realteil einer Eingangsimpedanz des Transponders verändert. Hierbei ist der Modulationsindex üblicherweise relativ groß, um entsprechend große Signal-Rausch-Abstände des zurückgestreuten Signals zu erzielen. Die Änderung im Realteil der Eingangsimpedanz führt zu einer Anpassung bzw. Fehlanpassung der Eingangsimpedanz des Transponders bezüglich einer Impedanz einer Transponderantenne, wodurch sich die Reflexions- bzw. Empfangseigenschaften der Transponderantenne verändern und somit mehr oder weniger Leistung durch den Transponder bzw. dessen Antenne reflektiert bzw. empfangen wird. Diese durch den Transponder selbst verursachten Schwankungen der Amplitude des empfangenen Trägersignals lassen sich jedoch nur mit erheblichem Aufwand von den durch die Basisstation erzeugten Notch-Signalen unterscheiden, die ebenfalls in einer Änderung der Amplitude des empfangenen Trägersignals resultieren. Dies gilt insbesondere dann, wenn die Feldabschwächung zur Notch-Erzeugung gering gehalten wird, um die Reichweite zu erhöhen. Zur Unterscheidung sind dann aufwendige Eingangsfilter im Transponder notwendig. Um eine Unterscheidung mittels Filter zu erzielen, müssen zusätzlich die Seitenbänder des empfangenen und des zurückgestreuten Signals vergleichsweise weit auseinanderliegen. Dies lässt sich oftmals nicht realisieren, da sonst entsprechende Normen verletzt würden.

Aus der FR 2 790 154 A ist ein System bekannt, bei dem ein Lesegerät mit einer kontaktlosen Chipkarte kommuniziert. Die Datenübertragung von der Chipkarte zum Lesegerät basiert hierbei auf induktiver Kopplung und nicht auf einem Rückstreuen des von einer Basisstation gesendeten Trägersignals.

Aus der EP 1 467 314 A1 ist ein rückstreubasierter Transponder bekannt, der nach dem Tag-Talks-First-Prinzip arbeitet.

**Aus der** EP 0 905 640 A1 **ist ein rückstreubasierter Transponder bekannt, der nach dem Empfangen eines Kommandos das Senden eine Identifikationscodes einstellt.**

Der Erfindung liegt als technisches Problem die Bereitstellung eines einfach und kostengünstig zu implementierenden Verfahrens zur drahtlosen Datenübertragung zugrunde, bei dem die Transponder nach dem Tag-Talks-First-Prinzip eine EAS-Funktionalität bereitstellen und ein Datenempfang durch die Transponder möglich ist, während diese ein Präsenzsignal senden.

Die Erfindung löst dieses Problem durch die Bereitstellung eines Verfahrens mit den Merkmalen des Anspruchs 1.

Erfindungsgemäß wird das Präsenzsignal durch Phasenmodulation und Rückstreuen eines von der Basisstation gesendeten Trägersignals erzeugt. Aufgrund der Phasenmodulation bleibt die Amplitude des zurückgestreuten bzw. des am Transponder empfangenen Signals im wesentlichen konstant, so dass aufgrund der Erzeugung des Präsenzsignals durch den Transponder in dessen RSSI-Schaltung keine Notche detektiert werden. Erst wenn die Basisstation zur Datenübertragung tatsächlich Notch-Signale erzeugt, werden diese auch im Transponder detektiert, obwohl dieser möglicherweise gleichzeitig ein Präsenzsignal sendet. Auf diese Weise kann ein Transponder bei aktiver EAS-Funktion beispielsweise beschrieben oder programmiert werden. Eine Schaltungsanordnung und ein Verfahren zur Erzeugung einer Phasenmodulation sind beispielsweise in der älteren deutschen Patentanmeldung 10325396.3 der Anmelderin dargestellt, deren Inhalt hiermit in vollem Umfang durch Verweis hierin aufgenommen wird.

Der Transponder beendet das Senden des Präsenzsignals, wenn der Transponder ein Kommando empfängt. Wenn die Basisstation einen Transponder detektiert hat, kann sie diesen auch mit Hilfe eines Kommandos "stumm" schalten, um weitere Transponder detektieren zu können.

In einer Weiterbildung des Verfahrens nach Anspruch 2 wird der Transponder ausschließlich durch das Trägersignal mit Betriebsleistung versorgt. In einer vorteilhaften Ausführungsform nach Anspruch 3 wird der Transponder initialisiert, wenn die Betriebsleistung zur Versorgung des Transponders ausreicht. Dies ermöglicht eine kostengünstige Realisierung eines EAS-Systems, da derartige passive Transponder keine Batterie zur Energieversorgung benötigen. Weiterhin wird sichergestellt, dass die Transponder ein Präsenzsignal erzeugen, sobald sie in die Reichweite einer Basisstation gelangen, d.h. das von der Basisstation empfangene Trägersignal zur Versorgung ausreicht.

In einer Weiterbildung des Verfahrens nach Anspruch 4 wird das Präsenzsignal durch Modulation des Trägersignals mit einem Unterträger erzeugt. Die Modulation des Trägersignals mit einem Unterträger oder Subcarrier ist beispielsweise in dem Lehrbuch Klaus Finkenzeller, RFID-Handbuch, 3. Aufl., HANSER, 2002, siehe insbesondere Kapitel 3.2.1.2.2 Lastmodulation mit Hilfsträger, beschrieben. Die Modulation des Trägersignals mit einem Unterträger ermöglicht eine vereinfachte Auswertung des zurückgestreuten Signals in der Basisstation, da das im Vergleich zum Trägersignal erheblich schwächere zurückgestreute Signal im Frequenzbereich in Seitenbänder verschoben ist und somit durch entsprechende Filter in der Basisstation vom Trägersignal getrennt werden kann.

In einer Weiterbildung des Verfahrens nach Anspruch 5 enthält das Präsenzsignal eine Transponderidentifikation. Auf diese Weise kann die Basisstation nicht nur detektieren, dass sich ein Transponder in ihrem Ansprechbereich befindet, sondern darüber hinaus in Abhängigkeit von der Transponderidentifikation geeignete Maßnahmen ergreifen, beispielsweise bei bestimmten Werten der Transponderidentifikation einen Alarm unterdrücken oder den Transponder anhand der Transponderidentifikation gezielt ansprechen, ohne zuvor ein Auswahlverfahren oder Antikollisionsverfahren durchführen zu müssen. Die zur Datenübertragung notwendigen Parameter, beispielsweise zur Kodierung der Bit-Wertigkeiten notwendige Zeitdauern, können hierbei in einem transponderinternen Speicher abgelegt werden und/oder von der Basisstation mit Hilfe eines Konfigurationskommandos eingestellt werden.

In einer Weiterbildung des Verfahrens nach Anspruch 6 enthält ein von der Basisstation gesendetes Konfigurationskommando und/oder ein transponderinterner Speicher einen oder mehrere Parameter zur Einstellung des Präsenzsignals. Dies ermöglicht beispielsweise, dass die durch das oder die Präsenzsignale hervorgerufenen Spektren nicht mit Spektren anderer RFID-Anwendungen kollidieren. Wenn das Präsenzsignal mit Hilfe eines von der Basisstation gesendeten Konfigurationskommandos eingestellt wird, kann die Basisstation dynamisch, in Abhängigkeit von den vorgefundenen Umgebungsbedingungen die Spektren der EAS-Anwendung einstellen. In einer vorteilhaften Ausgestaltung gemäß Anspruch 7 wird durch den oder die Parameter eine Frequenz und/oder ein Tastverhältnis eines Modulationssignals eingestellt, mit dem das Trägersignal moduliert wird. Hiermit lassen sich annähernd beliebige Spektren des Präsenzsignals einstellen. Die Frequenz und/oder das Tastverhältnis lassen sich gemäß Anspruch 8 aus einem transponderinternen Oszillatortakt ableiten. Hierzu kann beispielsweise ein Zähler mit dem transponderinternen Oszillatortakt betrieben werden, wobei ein Modulationszustand umgeschaltet wird, wenn der Zählerstand den Wert eines Parameters erreicht, der zur Einstellung des Präsenzsignals dient. Durch die Verwendung von zwei Parameterwerten, die ein Umschalten des Modulationszustands bewirken, wenn der Zählerstand den Wert des entsprechenden Parameters erreicht, lassen sich unterschiedliche Tastverhältnisse oder Puls/Pausenverhältnisse und somit unterschiedliche Spektren einstellen.

In einer Weiterbildung des Verfahrens nach Anspruch 9 wird durch den oder die Parameter das Erzeugen des Präsenzsignals freigeschaltet oder unterdrückt. Auf diese Weise lässt sich die EAS-Funktionalität des Transponders in Abhängigkeit davon aktivieren bzw. deaktivieren, ob diese benötigt wird oder nicht.

In einer Weiterbildung des Verfahrens nach Anspruch 10 beendet der Transponder das Senden des Präsenzsignals, wenn eine vorgebbare Maximalzeit abgelaufen ist. Nach einer gewissen Zeitdauer ist die Wahrscheinlichkeit hoch, dass die Basisstation das vom Transponder gesendete Präsenzsignal detektiert hat. Folglich ist es sinnvoll, dass der Transponder das Senden des Signals einstellt, damit weitere Transponder, die in die Reichweite der Basisstation gelangen, von dieser detektierbar sind.

In einer Weiterbildung des Verfahrens nach Anspruch 11 liegt die Frequenz des Trägersignals im UHF-Frequenzbereich.

Eine vorteilhafte Ausführungsform der Erfindung ist in den Zeichnungen dargestellt und wird nachfolgend beschrieben. Hierbei zeigen schematisch:
- Fig. 1: ein EAS-System mit einer Basisstation und einer zu sichernden Ware, an der ein Transponder angebracht ist,
- Fig. 2: ein Diagramm des zeitlichen Verlaufs eines Modulationssignals zur Modulation eines von der Basisstation gesendeten Trägersignals und
- Fig. 3: ein Diagramm des zeitlichen Verlaufs eines vom Transponder gesendeten Präsenzsignals und eines von der Basisstation gesendeten Kommandos.

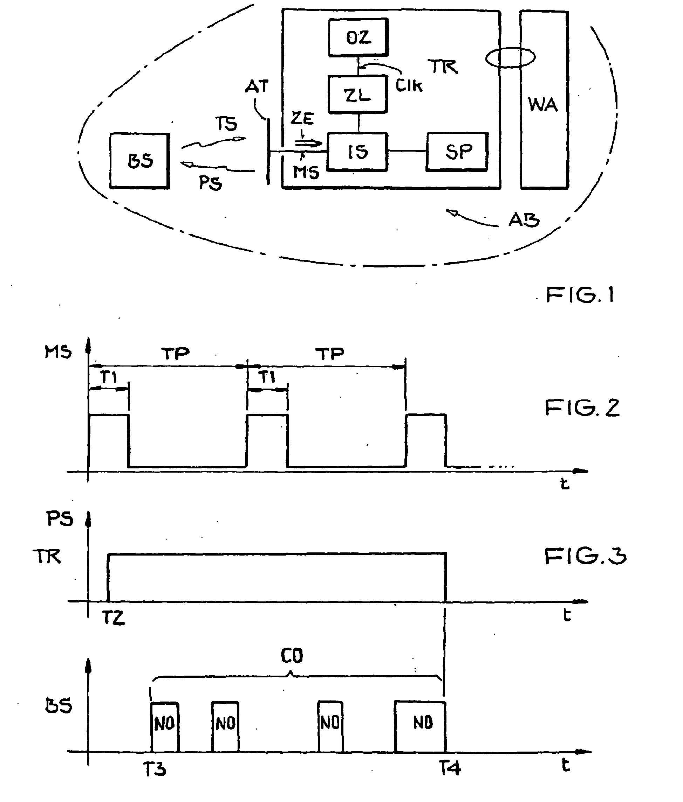

Fig. 1 zeigt ein EAS-System mit einer Basisstation BS, einer zu sichernden Ware WA und einem passiven, rückstreubasierten Transponder TR, der an der zu sichernden Ware WA derart angebracht ist, dass er nicht durch unautorisierte Personen von der Ware entfernt werden kann.

Der Transponder TR umfasst einen Speicher SP, einen Oszillator OZ, einen Zähler ZL, eine Impedanzsteuereinrichtung IS und eine Antenne AT.

Die Basisstation BS emittiert dauerhaft ein Trägersignal TS im UHF-Frequenzbereich. Wenn die zu sichernde Ware WA und somit der Transponder TR in einen Ansprechbereich AB der Basisstation gebracht wird, reicht die aus dem Trägersignal TS entnommene Leistung aus, den Transponder TR mit Betriebsleistung zu versorgen. Der Transponder TR führt einen Power-On-Reset(POR) aus, in dessen Verlauf er initialisiert wird.

Nach seiner Initialisierung sendet der Transponder TR ein Präsenzsignal PS, das durch Phasenmodulation und Rückstreuen des von der Basisstation BS gesendeten Trägersignals TS erzeugt wird, wenn ein in dem Speicher SP gespeicherter Parameter auf einen Freigabewert gesetzt ist. Ansonsten sendet der Transponder kein Präsenzsignal PS.

Fig. 2 zeigt ein Diagramm des zeitlichen Verlaufs eines im Transponder erzeugten Modulationssignals MS zur Modulation des von der Basisstation BS gesendeten Trägersignals TS. Das Modulationssignal MS weist eine Periodendauer TP, eine Ein-Dauer T1 und eine Aus-Dauer TP-T1 auf. Aus den genannten Dauern TP und T1 lässt sich in einfacher Weise eine Frequenz sowie ein Tastverhältnis des Modulationssignals MS berechnen. Das Modulationssignal MS stellt einen sogenannten Unterträger dar.

Zur Einstellung der Dauern T1 und TP enthält der Speicher SP Parameter in Form von Zählerwerten, die zum Vergleich mit einem Zählerstand des Zählers ZL dienen. Der Zähler ZL wird mit einem Taktsignal CLK des Oszillators OZ inkrementiert. Der Zähler ZL ist beispielsweise 8 Bit breit, so dass er nach 256 Takten überläuft. Die mit dem Speicher SP und dem Zähler ZL gekoppelte Impedanzsteuereinrichtung IS vergleicht den Zählerstand des Zählers ZL mit den gespeicherten Zählerwerten und wechselt jeweils den Zustand des Modulationssignals MS, wenn der Zählerstand mit einem Zählerwert übereinstimmt. Ein Wechsel des Zustands des Modulationssignals MS geht einher mit einer Änderung einer Eingangsimpedanz ZE des Transponders TR, die eine Phasenänderung und somit eine Phasenmodulation des zurückgestreuten Signals bzw. des Präsenzsignals PS bewirkt. Die Impedanzänderung geschieht hierbei derart, dass im wesentlichen keine Amplitudenänderung des zurückgestreuten und des vom Transponder empfangenen Signals erfolgt. Dies verhindert, dass aufgrund der Erzeugung des Präsenzsignals PS durch den Transponder TR Notche in einer nicht gezeigten RSSI-Schaltung des Transponders TR erzeugt werden. Der Transponder TR bleibt folglich auch während des Sendens des Präsenzsignals PS empfangsbereit.

Fig. 3 zeigt ein Diagramm des zeitlichen Verlaufs des vom Transponder TR gesendeten Präsenzsignals PS und eines von der Basisstation gesendeten Kommandos CO. Der Transponder TR beginnt an einem Zeitpunkt T2 mit dem Senden des Präsenzsignals PS. Nachdem die Basisstation BS das Präsenzsignal PS detektiert hat, sendet sie ab dem Zeitpunkt T3 ein Kommando CO an den Transponder TR. Das Kommando soll bewirken, dass der Transponder TR das Senden des Präsenzsignals PS einstellt. Es sind jedoch auch beliebige andere Kommandos, beispielsweise Programmier- und/oder Auslesekommandos möglich.

Das Kommando CO umfasst zeitlich aufeinanderfolgende Notche NO. Die Zeitdauern zwischen aufeinanderfolgenden Notchen kodieren hierbei die Wertigkeiten von zu übertragenden Bits. Aufgrund der Erzeugung des Präsenzsignals mit Hilfe der Phasenmodulation kann der Transponder TR bzw. dessen RSSI-Schaltung die Notche detektieren und anhand der Zeitdifferenzen zwischen ihnen einen zu dem Kommando CO gehörigen Bitstrom dekodieren. An einem Zeitpunkt T4, nachdem der Transponder das Kommando CO vollständig empfangen hat, beendet er das Senden des Präsenzsignals PS.

Das gezeigte Ausführungsbeispiel realisiert ein einfach und kostengünstig zu implementierendes EAS-Verfahren nach dem Tag-Talks-First-Prinzip, das einen Datenempfang durch die Transponder ermöglicht, selbst wenn dieser ein Präsenzsignal sendet.

## Patentansprüche

1. Verfahren zur drahtlosen Datenübertragung zwischen einer Basisstation (BS) und einem rückstreubasierten Transponder (TR), bei dem der Transponder (TR) nach einer Initialisierung oder in vorgebbaren Zeitintervallen unabhängig von durch die Basisstation (BS) gesendeten Daten ein Präsenzsignal (PS) erzeugt, wobei die Daten von der Basisstation mit Hilfe einer Amplitudenmödulation gesendet werden und der Transponder die Daten empfängt, während er das Präsenzsignal (PS) sendet, wobei der Transponder (TR) das Senden des Präsenzsignals (PS) beendet, wenn der Transponder (TR) ein Kommando (CO) empfängt.
**dadurch gekennzeichnet, dass**
- das Präsenzsignal (PS) durch Phasenmodulation und Rückstreuen eines von der Basisstation (BS) gesendeten Trägersignals (TS) erzeugt wird.

2. Verfahren nach Anspruch 1, **dadurch gekennzeichnet dass** der Transponder (TR) ausschließlich durch das Trägersignal (TS) mit Betriebsleistung versorgt wird.

3. Verfahren nach Anspruch 2, **dadurch gekennzeichnet, dass** der Transponder (TR) initialisiert wird, wenn die Betriebsleistung zur Versorgung des Transponders (TR) ausreicht.

4. Verfahren nach einem der vorhergehenden Ansprüche, **dadurch gekennzeichnet, dass** das Präsenzsignal (PS) durch Modulation des Trägersignals (TS) mit einem Unterträger erzeugt wird.

5. Verfahren nach einem der vorhergehenden Ansprüche, **dadurch gekennzeichnet, dass** das Präsenzsignal (PS) eine Transponderidentifikation enthält.

6. Verfahren nach einem der vorhergehenden Ansprüche, **dadurch gekennzeichnet, dass** ein von der Basisstation (BS) gesendetes Konfigurationskommando und/oder ein transponderinterner Speicher (SP) einen oder mehrere Parameter zur Einstellung des Präsenzsignals (PS) enthält.

7. Verfahren nach Anspruch 6, **dadurch gekennzeichnet, dass** durch den oder die Parameter eine Frequenz und/oder ein Tastverhältnis eines Modulationssignals (MS) eingestellt wird, mit dem das Trägersignal (TS) moduliert wird.

8. Verfahren nach Anspruch 7, **dadurch gekennzeichnet, dass** die Frequenz und/oder das Tastverhältnis aus einem tranpsonderinternen Oszillatortakt (CLK) abgeleitet wird.

9. Verfahren nach Anspruch 6, **dadurch gekennzeichnet, dass** durch den oder die Parameter das Erzeugen des Präsenzsignals (PS) freigeschaltet oder unterdrückt wird.

10. Verfahren nach einem der vorhergehenden Ansprüche, **dadurch gekennzeichnet, dass** der Transponder (TR) das Senden des Präsenzsignals (PS) beendet, wenn eine vorgebbare Maximalzeit abgelaufen ist.

11. Verfahren nach einem der vorhergehenden Ansprüche, **dadurch gekennzeichnet, dass** die Frequenz des Trägersignals (TS) im UHF-Frequenzbereich liegt.

## Claims

1. Method for wire-free data transmission between a base station (BS) and a backscatter-based transponder (TR), in which the transponder (TR) after an initialisation or at predeterminable time intervals generates a presence signal (PS) independently of data transmitted by the base station (BS), wherein the data are transmitted by the base station with the help of an amplitude modulation and the transponder receives the data while it transmits the presence signal (PS), wherein the transponder (TR) ends transmission of the presence signal (PS) when the transponder (TR) receives a command (CO), **characterised in that** the presence signal (PS) is generated by phase modulation and backscattering of a carrier signal (TS) transmitted by the base station (BS).

2. Method according to claim 1, **characterised in that** the transponder (TR) is supplied with operating power exclusively by the carrier signal (TS).

3. Method according to claim 2, **characterised in that** the transponder (TR) is initialised when the operating power is sufficient for supply of the transponder (TR).

4. Method according to one of the preceding claims, **characterised in that** the presence signal (PS) is generated by modulation of the carrier signal (TS) by a subcarrier.

5. Method according to one of the preceding claims, **characterised in that** the presence signal (PS) contains a transponder identification.

6. Method according to one of the preceding claims, **characterised in that** a configuration command transmitted by the base station (BS) and/or a memory (SP) internal to the transponder contains one or more parameters for setting the presence signal (PS).

7. Method according to claim 6, **characterised in that** a frequency and/or a keying ratio of a modulation signal (MS), by which the carrier signal (TS) is modulated, is set by the parameter or parameters.

8. Method according to claim 7, **characterised in that** the frequency and/or the keying ratio is or are derived from an oscillator clock pulse (CLK) internal to the transponder.

9. Method according to claim 6, **characterised in that** generation of the presence signal (PS) is freed or suppressed by the parameter or parameters.

10. Method according to one of the preceding claims, **characterised in that** the transponder (TR) ends transmission of the presence signal (PS) when a predeterminable maximum time has expired.

11. Method according to one of the preceding claims, **characterised in that** the frequency of the carrier signal (TS) lies in the UHF frequency range.

## Revendications

1. Procédé pour la transmission de données sans fil entre une station de base (BS) et un transpondeur (TR) basé sur la rétrodiffusion, dans lequel le transpondeur (TR) génère un signal de présence (PS) après une initialisation ou à des intervalles de temps prédéterminés, indépendamment de données envoyées par la station de base (BS), dans lequel les données de la station de base sont envoyées au moyen d'une modulation d'amplitude et le transpondeur reçoit les données pendant qu'il envoie le signal de présence (PS), dans lequel le transpondeur (TR) achève l'envoi du signal de présence (PS) lorsque le transpondeur (TR) reçoit un ordre (CO), **caractérisé en ce que**
. le signal de présence (PS) est généré par modulation de phase et rétrodiffusion d'un signal de porteuse (TS) envoyé par la station de base (BS).

2. Procédé selon la revendication 1, **caractérisé en ce que** le transpondeur (TR) est alimenté en énergie de fonctionnement uniquement par le signal de porteuse (TS).

3. Procédé selon la revendication 2, **caractérisé en ce que** le transpondeur (TR) est initialisé lorsque l'énergie de fonctionnement pour l'alimentation du transpondeur (TR) est suffisante.

4. Procédé selon l'une quelconque des revendications précédentes, **caractérisé en ce que** le signal de présence (PS) est généré par modulation du signal de porteuse (TS) avec une sous-porteuse.

5. Procédé selon l'une quelconque des revendications précédentes, **caractérisé en ce que** le signal de présence (PS) contient une identification du transpondeur.

6. Procédé selon l'une quelconque des revendications précédentes, **caractérisé en ce qu'**un ordre de configuration envoyé par la station et base (BS) et/ou une mémoire interne (SP) du transpondeur contient un ou plusieurs paramètres pour le réglage du signal de présence (PS).

7. Procédé selon la revendication 6, **caractérisé en ce qu'**on utilise le ou les paramètres pour régler une fréquence et/ou un taux d'impulsions d'un signal de modulation (MS) avec lequel on module le signal de porteuse (TS).

8. Procédé selon la revendication 7, **caractérisé en ce que** la fréquence et/ou le taux d'impulsions sont/est déduite/s d'une cadence d'oscillateur (CLK) interne au transpondeur.

9. Procédé selon la revendication 6, **caractérisé en ce que** l'on utilise le ou les paramètres pour libérer ou supprimer la génération du signal de présence (PS).

10. Procédé selon l'une quelconque des revendications précédentes, **caractérisé en ce que** le transpondeur (TR) achève l'envoi du signal de présence (PS) lorsqu'une durée maximale pouvant être prédéfinie s'est écoulée.

11. Procédé selon l'une quelconque des revendications précédentes, **caractérisé en ce que** la fréquence du signal de porteuse (TS) est située dans la zone des ultra-hautes fréquences (UHF).
